# EUROPEAN PATENT SPECIFICATION

(11) **EP 2 451 219 B1**
(45) Date of publication and mention of the grant of the patent: **07.08.2013**
(21) Application number: 10360040.9
(22) Date of filing: 05.11.2010
(51) Int. Cl.: H04W 48/16, G06Q 20/32

(54) **Interrogation unit**
Abfrageeinheit
Unité d'interrogation

(43) Date of publication of application: 09.05.2012
(73) Proprietor: Alcatel Lucent, 75007 Paris (FR)
(72) Inventor: Kennedy, Irwin O., Londonderry BT47 6HY (GB); Claussen, Holger, Co Kildare (IE)
(74) Representative: Sarup, David Alexander

(56) References cited:
- EP-A2- 1 051 053
- WO-A1-2007/088344
- WO-A1-2008/040391
- WO-A2-98/34421

## Description

### FIELD OF THE INVENTION

The present invention relates to a user equipment identification interrogation unit, a method of interrogating and identifying user equipment and a computer program product.

### BACKGROUND

Wireless telecommunications systems are known. In such systems, user equipment roam through a wireless telecommunications network. Base stations are provided which support areas of radio coverage. A number of such base stations are provided and are distributed geographically in order to provide a wide area of coverage to user equipment. When user equipment is within an area served by a base station, communication may be established between the user equipment and base station over associated radio links. A base station typically supports a number of sectors within a geographical area of service.

It is desired to enable user equipment to interact with real world objects. Use of user equipment, such as mobile phones, to access interactions with real world objects is particularly attractive since end users are familiar and comfortable with their mobile telephones.

Possible interactions with real world objects include, for example, convenient payment via mobile phone; payment can be performed by placing a mobile phone or other similar user equipment on a payment area on a shop counter. Furthermore, after successful payment an SMS receipt of the transaction may be sent to user equipment.

Further examples of interactions with real world objects may include allowing user equipment to download real world content by touching an object. For example, it may be possible to download a train timetable directly to user equipment by touching user equipment against a relevant ticket machine or timetable at a train station. A download to user equipment may be triggered by placing the phone on the content; for example, a ticket machine at a railway station. Alternatively, it may be possible to send a link to the timetable via SMS message or similar from where it can then be accessed by a user.

Furthermore, user equipment may be used as a keyless entry system for houses, cars and work places.

It will be appreciated that the examples of interaction given represent only a few of a large possible number of possibilities regarding local interaction between user equipment and real world objects.

In order to reliably provide interactive services between user equipment and a real world object, it may be necessary to obtain an indication of identity from user equipment placed in the region of the real world object.

EP 1 051 053 describes a method of identifying a mobile phone user in a communications network. A virtual base station is provided which is in direct contact with a test mobile phone. In order to identify a mobile phone, the virtual base station is placed in close proximity to the target mobile phone. The test mobile phone detects a list of all real base stations near the target mobile phone. The Virtual Base station then transmits a signal using parameters of an identified neighbouring base station having a different local area code to a serving base station. When the Transmit power of the virtual base station received at the target mobile phone is greater than that of a service base station, the target mobile phone makes a change to try to connect to the virtual base station. As part of an attempted location area code update the target mobile phone releases relevant identification parameters such as IMSI, IMEI labels. Those parameters can be used to identify a mobile phone user. After completion of identification of the target mobile phone it is returned to its serving base station by the virtual base station.

WO2007/088344 describes a method of acquiring an identity parameter of a device registered with a network. The method comprises transmitting a false call broadcast including a non-integrity protected identity request and receiving the identity parameter from the device in response to the identity request.

WO 98/34421 describes a method of detecting mobile telephones located in a given region, for example an acroplane or airport waiting room. The purpose of the method is to detect those mobile telephones which are switched on in the given region. To "activate" mobile telephones in the region, the mobile telephones in the region are triggered by a location update procedure.

WO2008/040391 describes a method for automatic electronic authorisation of entry into a geographic area. The method comprises: transmitting, by a transmitter associated with a toll base station, a signal indicative of the presence of the toll base station; detecting, using a receiver associated with the toll base station, a request from a mobile to connect to the toll base station; transmitting, by the transmitter, an identity request signal to the mobile, detecting an identity response signal which identifies the mobile, determining the identity of a subscriber associated with the mobile based on the detected identity response signal and authorising subscriber entry based on the determined subscriber identity.

It is desired to provide a user equipment identification interrogation unit to enable such interactions.

### SUMMARY

A first aspect provides a method of identifying user equipment in a wireless telecommunications network, said user equipment being operable to communicate with network nodes in said wireless telecommunications network, said method comprising the steps of:
receiving an indication representative of downlink radio communication characteristics of network nodes (20) recognisable by said user equipment;
emulating said downlink radio communication characteristics of at least one of said network nodes to establish communication with said user equipment:
   determining a sub-set of all possible user equipment unique identifiers; and
   triggering release of an indication of identity by said user equipment, by transmitting a paging request to user equipment identifiable by said sub-set of all possible user equipment unique identifiers on said downlink signal comprising radio communication characteristics substantially identical to at least one of said network nodes recognisable by said user equipment.

In order to reliably provide interactive services between user equipment and a real world object, it is required that local interactions between user equipment and real world objects are only triggered by user equipment which wishes to download or otherwise have access to real world content, extraction of a unique identifier from user equipment in the region of a real world object can ensure that interactive services are provided only to that user equipment which is requesting it.

Furthermore, the interaction between a real world object and user equipment may require the presence of an interrogation unit to allow a unique user equipment identifier to be extracted from user equipment in a short range, or small scale, coverage area provided by the interrogation unit associated with a real world object. An interrogation unit must operate in such a way to allow existing cellular network infrastructure supplied by usual macro base stations in a wireless telecommunications network to be complemented without significant disruption.

The interrogation unit allows co-existence of interactions with real world devices with existing macro cellular networks whilst reusing available frequency resources and minimising disturbance to those networks. Fast extraction of user equipment identifier by an interrogation unit allows new services to be offered based upon local interactions between user equipment and real world objects without causing significant disruption.

In order to extract a user equipment identifier, an interrogation unit is operable to communicate with user equipment within a radio coverage area supported by the interrogation unit. Accordingly, an interrogation unit may have the ability to determine the radio environment in which it is deployed. That is to say, it is operable to listen to downlink and uplink signals within the network on all carriers of potential interest, from all base stations of potential interest.

In order to establish communication with user equipment, an interrogation unit has the ability to set its downlink radio signal or signals to match, for example, in frequency, scrambling code, location area code, and other similar downlink communication parameters, one or more cells in the area that user equipment exists. The downlink of an interrogation unit can be set such that user equipment will typically be monitoring those downlink channels (or similar), or camping upon those downlink channels (or similar) in a macro network. Such an arrangement seeks to minimise the time it takes for the interrogation unit to establish a viable communication link with the user equipment in its coverage area.

If multiple macro network downlink signals are possible candidates for communication with user equipment in a location, for example at the overlap between coverage areas provided by adjacent base stations, multiple carriers can be emulated to ensure that all user equipment passing by, no matter which cell they are served by, can still be detected. It will be appreciated that in areas where two or more service providers are providing coverage on different frequencies, in order that the detector works across all frequencies it may be necessary to allow a detector to work across or impersonate those same multiple frequencies in its downlink.

Alternatively, the service providers could agree and nominate one or more frequencies to be used to establish communication with user equipment. This frequency may be reserved exclusively for this purpose or it may be in use. Each service provider may then instruct all of their user equipment to seek out this frequency with particular downlink channel characteristics. This may be done by populating the neighbour list of all cells to contain these details. e.g. In UMTS a particular scrambling code and location area for each service provider. The detecting equipment may then radiate on these agreed frequencies with the agreed downlink characteristics. By reducing the number of frequencies that need to be radiated on, the detectors cost reduces.

The result of impersonation of downlink characteristics of the greater surrounding telecommunications network is that cells supported by the detector, albeit short range cells, automatically become suitable candidates for a cell selection or reselection procedure already known to user equipment within a macro scale wireless network.

Ensuring extraction of a unique identifier occurs quickly assists in minimising disruption to the greater network and inconvenience to an end user seeking interactive services.

In one embodiment, the step of emulating comprises the steps of:
transmitting a downlink signal comprising radio communication characteristics substantially identical to at least one of the network nodes recognisable by the user equipment determined to be a serving network node of said user equipment.
Accordingly, by emulating downlink transmissions as if from a base station, or other network node which supports the user equipment serving cell, very rapid communication with user equipment can be established.

To page user equipment it is necessary to first get user equipment to listen to the detector cell. Use of paging messages requires user equipment to be listening to paging channels of a cell under the control of the detector. Use of paging messages may ensure that there is no need to rely on user equipment reading a set of system information blocks which may be transmitted by an interrogation unit to ensure user equipment continues function within a communication network. In order to use paging messages a user equipment is required to be synchronized to a detector cell and listening and reacting when addressed to paging messages. A paging message may avoid the need for user equipment to read system information blocks and thus the process of establishing contact, and extracting a unique identifier from user equipment can be significantly quicker if the interrogation unit is able to use a paging message to address user equipment.

In one embodiment, transmission of the paging request comprises transmission of a series of user equipment pages, each addressed to a single user equipment in the wireless telecommunications network. In one embodiment, the transmission of the paging request comprises transmission of a series of grouped user equipment pages, each addressed to a group of user equipment in the wireless telecommunications network. Accordingly, it may be possible to minimise the response time of user equipment by paging possible user equipment groups rather than cycling through each possible user equipment identity individually and hoping to receive a response.

In one embodiment, the step of emulating comprises the steps of:
transmitting a downlink signal comprising radio communication characteristics substantially identical to at least one of the network nodes recognisable by the user equipment determined to be.in a neighbour list of network nodes maintained by the user equipment. Accordingly, by emulating downlink transmissions as if from a base station, or other network node which is already in user equipment neighbour lists, it is likely that the user equipment will be monitoring for, and expecting to detect transmissions from such base stations and very rapid communication with user equipment can be established.

In one embodiment, the step of emulating comprises the steps of:
transmitting a first downlink signal comprising radio communication characteristics substantially identical to at least one of the network nodes recognisable by the user equipment to discover user equipment in a first predetermined area, and
transmitting a second downlink signal comprising radio communication characteristics substantially identical to at least one of the network nodes recognisable by the user equipment. Accordingly, a first signal may be used to determine, in slow time, a list of user equipment identities in a predetermined coverage area, for example, in a railway station building, and that slow time list, or discovery step, may become particularly useful if a second downlink signal is used, for example, by railway station turnstiles, to effect full authenticated identification of user equipment, since the number of possible user equipment which could be at a turnstile will not be an entire network worth of user equipment, but merely those already determined to be in the station building. Such pre-emptive discovery emulation may assist in speeding up a further process, for example payment, or assist in the implementation of paging processes, by minimising necessary paging options.

In one embodiment, the step of triggering further comprises the steps of:
causing the user equipment to initiate a location area update procedure.

Various mechanisms exist in a wireless communication network to extract or exchange unique identifiers from user equipment. One such mechanism is a location area update procedure, during which user equipment passes a unique identifier, usually its IMSI, to the network. Other mechanisms also exist for extracting unique identifiers from user equipment; for example, paging messages may instruct or query user equipment, resulting in the release of a unique identifier.

In one embodiment, the step of causing the user equipment to initiate a location area update comprises the steps of: emulating the downlink radio communication characteristics of at least one of the network nodes with a signal strength sufficient to be received at the user equipment greater than a corresponding signal transmitted by the network node being emulated. Accordingly, the user equipment may determine, whilst in a coverage area supported by the interrogation unit, that the unit is supporting a cell which appears to be a more suitable candidate for good communication with the greater network. Such determination may result in user equipment requesting cell reselection, and, as part of that cell reselection, a location area update may be triggered.

In one embodiment, the method further comprises the steps of:
transmitting an instruction to change the user equipment cell reselection parameters. Accordingly, a cell supported by the interrogation unit may be forced to appear to user equipment as a more suitable candidate for good communication with the greater network. Such determination may result in user equipment requesting cell reselection, and, as part of that cell reselection, a location area update may be triggered.

In one embodiment, the method further comprises the steps of:
transmitting an instruction to the user equipment to re-read downlink communication channel communications. It will be appreciated that user equipment may not automatically read all information transmitted on a downlink channel supported by the interrogation unit. If the unit is emulating the serving cell, but with a different location area code, transmission of an instruction to reread communication channels may result in user equipment determining that a location area code has altered and a location area update procedure may be triggered.

In one embodiment, the method further comprises the steps of: transmitting an interference signal on a radio channel corresponding to a communication channel from at least one of the network nodes recognisable by the user equipment determined to be a serving network node of the user equipment. Accordingly, if user equipment in the coverage area supported by an interrogation unit experiences significant interference on the serving cell downlink, it may be operable to request a transfer to an alternative cell. That cell may be supported by the interrogation unit and may have a different location area to that of the serving cell. Injection of interference may thus result in user equipment reselecting a cell, determining that a location area code has altered and triggering a location area update procedure.

In one embodiment, the indication of identity comprises an IMSI or TMSI.

In one embodiment, the method further comprises the steps of: authenticating the released indication of identity received from the user equipment. Accordingly, an interrogation unit may be able to communicate with a greater communication network and establish full authentication of a user equipment identifier. Such full authentication of identifier allows for reliable billing of an end user.

In one embodiment, the method comprises firstly discovering user equipment in the vicinity with a long range / slow sensing function and then a short range / fast sensing function, and continuously page those user equipment discovered.

A second aspect provides a computer program product, operable when executed on a computer, to perform the method steps of the first aspect.

A third aspect provides an interrogation unit operable to identify user equipment in a wireless telecommunications network, said user equipment being operable to communicate with network nodes in said wireless telecommunications network, said interrogation unit comprising:
reception logic operable to receive an indication representative of downlink radio communication characteristics of network nodes recognisable by said user equipment;
transmission logic operable to emulate said downlink radio communication characteristics of at least one of said network nodes to establish communication with said user equipment;
determination logic operable to determine a subset of all possible user equipment unique identifiers;
interrogation logic operable to trigger release of an indication of identity by said user equipment, by transmitting a paging request to user equipment identifiable by said subset of all possible user equipment unique identifiers on said downlink signal comprising radio communication characteristics substantially identical to at least one of said network nodes recognisable by said user equipment.

In one embodiment, wherein the transmission logic is operable to transmit a downlink signal comprising radio communication characteristics substantially identical to at least one of the network nodes recognisable by the user equipment determined to be a serving network node of the user equipment.

In one embodiment, wherein the transmission logic is operable to transmit a downlink signal comprising radio communication characteristics substantially identical to at least one of the network nodes recognisable by the user equipment determined to be in a neighbour list of network nodes maintained by the user equipment.

In one embodiment, wherein the interrogation logic is operable to transmit a paging request to the user equipment on the downlink signal comprising radio communication characteristics substantially identical to at least one of the network nodes recognisable by the user equipment.

In one embodiment, transmission of the paging request comprises transmission of a series of user equipment pages, each addressed to a user equipment in the wireless telecommunications network.

In one embodiment, transmission of the paging request comprises transmission of a series of grouped user equipment pages, each addressed to a group of user equipment in the wireless telecommunications network.

In one embodiment, the interrogation logic is operable to cause the user equipment to initiate a location area update procedure.

In one embodiment, the interrogation logic is operable to cause the user equipment to by emulating said downlink radio communication characteristics of at least one of said network nodes with a signal strength sufficient to be received at said user equipment greater than a corresponding signal transmitted by said network node being emulated.

In one embodiment, the transmission logic is operable to transmit an instruction to change the user equipment cell reselection parameters.

In one embodiment, the transmission logic is operable to transmit an instruction to the user equipment to re-read downlink communication channel communications.

In one embodiment, the unit further comprises interference logic operable to transmit an interference signal on a radio channel corresponding to a communication channel from at least one of the network nodes recognisable by the user equipment determined to be a serving network node of the user equipment.

In one embodiment, the indication of identity comprises an IMSI or TMSI.

In one embodiment, the unit further comprises authentication logic operable to authenticate the released indication of identity received from the user equipment.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings in which:
Figure 1 illustrates schematically the main components of a wireless telecommunications system according to one embodiment;
Figure 2 illustrates schematically an interaction between a macro cell and detector in accordance with one embodiment; and
Figure 3 illustrates schematically an interaction between a macro cell and detector in accordance with a further embodiment.

### DETAILED DESCRIPTION OF EMBODIMENTS

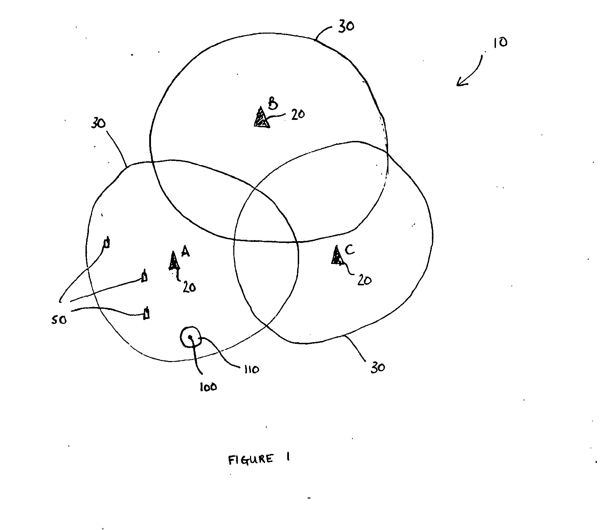

Figure 1 illustrates schematically the main components of a wireless telecommunications system 10 according to one embodiment. User equipment 50 roam through the wireless telecommunications system. Base stations 20 are provided which support areas of radio coverage 30. A number of such base stations 20 are provided at distributed geographically in order to provide a wide area of coverage to user equipment 50. When user equipment is within an area served by a base station 30, communications may be established between the user equipment and the base station over associated radio links. A detector 100, in accordance with embodiments, is provided within an area of coverage 30 provided by a base station 20. Detector 100 is operable to quickly detect close proximity of user equipment 50 using a short range cellular sensor. The cellular sensor radiates downlink signals in a similar way to a base station 20. Embodiments described relate to different techniques for achieving fast camping of a user equipment 50 on detector 100.

Although the following is described in relation to a UMTS cellular system, it will be appreciated that techniques can be generalised to any cellular system including, for example, GSM, CDMA and LTE. In all such wireless systems there typically exists some mechanism whereby user equipment informs the network 10 of changes in location as it roams through the network. Such location updates are important in both idle mode (in which user equipment has no active collection with the network 10; for example, a voice call) and active mode (in which there is an active connection).

In idle mode, user equipment 50 informs the network of its location so that incoming paging messages from the network can be routed to an appropriate cell hosted by a base station or collection of cells.

In active mode, user equipment and the network 10 work together so that the user equipment remains connected to one or more base stations A, B and C as shown in Figure 1 at all times. In active mode, user equipment is operable to continuously assess signal strength received from each base station A, B and C in the area and react as appropriate. Possible reactions include switching the set of base stations a user equipment maintains an active link with and may further include switching on or adjusting a network 10 or user equipment 50 in some way, for example by switching on supplementary base stations in an area to maintain good connectivity with user equipment 50.

In UMTS location area is a concept used to denote a cluster of base stations or cells that together form a particular location. The cluster of cells which form a particular location area are typically neighbouring cells. For example, as shown in Figure 1, base stations A, B and C may all be allocated the same location area. It will be appreciated that mobile telecommunication network 10 comprises further base stations not shown in Figure 1. Those base stations located outside location area 1 will be allocated a different location area code.

It will be appreciated that in UMTS the term ,"location area" refers to cell groupings for user equipment operating in circuit switch mode. Another grouping, termed "routing area" may also exist for user equipment in UMTS, those user equipment operating in packet switch mode. Throughout what follows, the term "location area" is used to mean both circuit switch grouping and packet switch grouping of cells. That is to say, the term "location area" is used in its most general and functional sense.

User equipment 50 may roam within a location area without being asked to provide an identity or identifier. When user equipment strays outside location area 1 (in this case represented by base stations A, B and C), the network 10 requires to know where the user equipment 50 has roamed to and if user equipment 50 detects that it is outside location area 1, it provides its identification to the network 10 in accordance with existing network standards. Such location updates further allow incoming paging messages from network 10 to an appropriate base station (in area location 1, the appropriate collection of cells would be A, B, C), so that the paging message reaches the desired user equipment 50.

In order to reliably provide interactive services between user equipment and a real world object, it is required that local interactions between user equipment and real world objects are only triggered by user equipment which wishes to download or otherwise have access to real world content.

Furthermore, the interaction between a real world object and user equipment 50 may require the presence of a detector 100 in accordance with embodiments to allow a unique user equipment identifier to be extracted from user equipment in a coverage area provided by detector 100. A detector 100 must operate in such a way to allow existing cellular network infrastructure supplied by base stations A, B and C to be complemented without significant disruption. The detector must allow co-existence of interactions with real world devices with existing macro cellular networks whilst reusing the same frequency resources and minimising disturbance to those networks. Fast extraction of user equipment identifier by detector 100 allows new services to be offered based upon local interactions between user equipment and real world objects without causing significant disruption.

In order to extract a user equipment identifier, detector 100 must be operable to communicate with user equipment within a coverage area provided by a detector 100. Accordingly, embodiments of a detector have the ability to determine radio environment in which it is deployed. That is to say, detector 100 is operable to listen to downlink and uplink signals within the network 10 on all carriers of potential interest. Such operation allows detector 100 to discover the power levels of transmission of neighbouring cells and read broadcast information on those neighbouring cells. In the embodiments shown in Figure 1, detector 100 will be able to listen to downlink signals on carriers of interest being transmitted by base station A. Furthermore, since base station A will transmit an indication of its neighbour list (those base stations located in a similar geographical area), detector 100 will be alerted to the possible existence of base stations B and C.

In accordance with further embodiments, the "listening" or "sniffing" behaviour of detector 100 may be such that detector 100 can be utilised such that it can adapt its own broadcast and downlink signals as appropriate and synchronize the timing of its transmissions to those of a serving or neighbouring cell in that location. For example, in a UMTS wireless communications network, detector 100 may synchronize the timing of its transmissions (system frame number) with those of a serving or neighbouring cell.

In order that detector 100 can communicate with user equipment 50, detector 100 is operable to determine the radio environment in which it exists. In particular, in order to communicate with user equipment 50 the detector has the ability to set its downlink radio signal or signals to match one or more cells in the area that user equipment 50 exists and, more importantly, the downlink of the detector is set such that user equipment 50 may be monitoring those downlink channels or similar, or camping upon those downlink channels or similar in the macro network.

The term "downlink signal" refers to a logical entity providing service to a user equipment 50 and may, for example, include signals from femto, pico or other base stations providing full network service in wireless communication network 10. If multiple downlink signals are possible candidates in a location, for example at the overlap between coverage areas provided by adjacent base stations, multiple carriers are employed by a detector 100 to ensure that all user equipment passing by, no matter which cell they are served by, can still be detected. It will be appreciated that in areas where two or more service providers are providing coverage on different frequencies, in order that the detector works across all frequencies it may be necessary to allow the detector 100 to work across or impersonate those same multiple frequencies in its downlink.

The result of detector impersonation of downlink characteristics of the greater surrounding telecommunications network is that cells supported by the detector, albeit very small short range cells, automatically become suitable candidates for a cell selection or reselection procedure already known to user equipment 50 within the greater wireless network 10.

Use of a known cell reselection procedure allows quick detection independent of the parameter settings of a serving base station or macro cell. Of course, there may be some dependency regarding parameters set at user equipment 50, in terms of cell reselection implementation.

Impersonation of existing cells that user equipment 50 is expecting to see allows a convenient and necessary route to sensible communication with user equipment 50 over a small coverage area provided by detector 100. Detector 100 will not typically itself provide full radio network functionality. That is to say, user equipment cannot make and receive calls through connection to detector 100. Nonetheless, procedures which exist within the wireless communication network and typical wireless communication protocols may be used so that detector 60 may extract from user equipment 50 the unique identifier required to provide reliable interaction with a real world object.

Various mechanisms exist in a wireless communication network to extract or exchange unique identifiers from user equipment 50. One such mechanism is a location area update procedure, during which user equipment passes a unique identifier, usually its IMSI, to the network. Other mechanisms also exist for extracting unique identifiers from user equipment 50; for example, paging messages may instruct or query user equipment, resulting in the release of a unique identifier. In order to trigger these mechanisms it is essential that detector 100 is operable to successfully communicate with user equipment 50. That is to say, the detector 100 must be able to communicate in a way the user equipment 50 is expecting, or attempts to extract any information from the user equipment are likely to be unsuccessful.

In some known wireless communication systems each user equipment is made aware of its surrounding radio environment. That is to say, when communication with a base station is established, that base station broadcasts information to user equipment 50 regarding further base stations which may be found in the geographical area. That list of surrounding base stations is known as a neighbour list. It will be appreciated that a neighbour list, and the maintenance of a neighbour list at user equipment, allows the location of the roaming user equipment 50 within telecommunications network 10 to be determined with a minimum of unnecessary network signalling, since user equipment 50 is informed of those base stations with which it may be able to establish a communication link. The base station with which user equipment 50 communicates primarily and with which an active state would be maintained if necessary is referred to as a serving base station and it hosts a serving cell. Operation of user equipment 50 within a network will typically be controlled by messages received from the network and sent by the serving cell. It is the serving cell that determines, for example, a parameter (known as T reselection) which determines how long user equipment 50 needs to wait and before performing a cell reselection process, in the event that a serving cell no longer represents the "best" choice for communication between user equipment 50 and the network as a whole.

In embodiments of the detector, it is possible to override settings at the user equipment set by a serving cell which could prevent fast discovery of the detector. It is possible to do this by effectively impersonating the serving cell so that user equipment 50 believes it is still listening to the serving cell when, in fact, it is listening to transmissions from detector 100. Since the detector may be very precisely controlled, various parameters typically set by the serving cell may be set by the detector. In a UMTS cellular system such impersonation can be achieved and connection established by providing the detector 100 with an ability to have a higher receive power at user equipment 50 when it is in proximity of detector 100. Detector 100 may use the same location area code and may precisely match the frame timing and synchronization of the serving cell provided by the macro layer. As a result of simply seeing detector 100 more strongly, the result is that user equipment 50 listens to the transmissions of detector 100. Once the user equipment is listening to the downlink channels of detector 100 it is possible to control it.

In a UMTS system embodiment the detector is operable such that its broadcast channel contents include values that set parameters at the user equipment to suit detector purposes and the detector instructs the user equipment to re-read them if necessary. On re-reading the broadcast channels, user equipment in proximity of the detector may, for example, discover a location area code has changed, thereby necessitating a location area code update which extracts a user equipment identifier from user equipment 50 at the detector.

In alternative embodiments, if the user equipment does not quickly react to a changed location area code by, for example, detecting it itself, the detector may operate to page user equipment with a change to cell reselection parameters, thereby triggering a cell reselection evaluation procedure.

In some embodiments the detector may be operable to populate user equipment neighbour list with another cell under the creation and control of detector 100, then force reselection at the user equipment of that new cell, including the performing of a location area update. In such embodiments relative power levels and all related parameters are set to make the second cell attractive to user equipment such that it makes a fast decision and as a result performs a location area update quickly, thereby allowing detector 100 to extract a unique identifier from user equipment 50 in a short period of time.

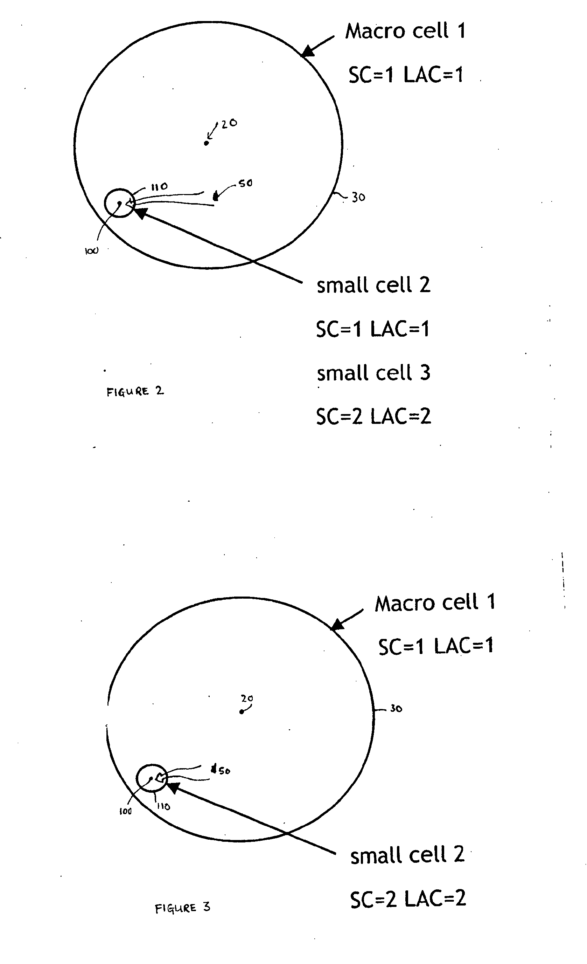

Figure 2 is a schematic illustration of the interaction between a macro cell and a detector according to one embodiment.

In the embodiment shown in Figure 2, base station 20 supports a cell across a region of coverage 30. Within that region of coverage 30 there is provided a detector 100 which itself provides a region of coverage 110. Base station 20 supports a macro cell 1 in geographical region 30, having a scrambling code of 1 and a local area code of 1. Detector 100 supports two small cells in region 110, those small cells being known as small cell 2 with a scrambling code of 1 and local area code of 1, and small cell 3 with a scrambling code of 2 and a local area code of 2.

The detector 100 can impersonate serving cell, in this case macro cell 1, supported by base station 20, extremely closely. It does this by sniffing and determining the radio characteristics of macro cell 1 and then populating its own downlink channels with exactly the same information as that contained within the serving cell. In this embodiment the small cell 2 has an identical frequency, timing and other information as that contained by macro cell 1. In this embodiment the timing (system frame numbers) are also synchronized to the serving cell. The information is only modified in embodiments as necessary to achieve a location area update.

The cell serving the idle mode user equipment is supported by base station 20 and is part of the existing macro cellular network 10. Its parameter settings are difficult and expensive to change. It is therefore advantageous for a detector to be able to deal with those parameters being set to the worse case values with respect to what the detector wishes to achieve. As discussed previously, time reselection according to a UMTS cellular system is typically broadcast in system information messages broadcast on a channel of the serving cell. That instruction informs the user equipment how many seconds it must wait before selecting another cell to camp upon. Time reselection may be set to a worse case value by a base station of 31 seconds which, given that a detector located on a real world object aims to extract user equipment identity as quickly as possible, causes some issues and it will typically be desirable to ensure that the user equipment reveals its identifier in far fewer seconds, typically a fielder of 5.

As shown in Figure 2, the user equipment 50 is within geographical region 30 and camped normally on the macro cell network provided by base station 20. That macro cell 1 has a scrambling code of 1, a local area code of 1 and is supported by base station 20. It acts as the serving cell for user equipment 50. As user equipment 50 moves into geographical area 110 which may stand only a few centimetres around detector 100, it enters a region covered by small cell 2 and small cell 3 supported by detector 100. The detector impersonates the serving cell, macro cell 1, by radiating on the same carrier frequency the slot and frame synchronization identical to that of the macro cell. Due to the close proximity of user equipment 50 to small cell 2 supported by detector 100, the path lost to the macro cell 1 is very large. The power radiated by detector 100 in relation to cell 2 is less than cell 1, to minimise disruption caused by detector 100 to operation of the wireless telecommunications network generally. However, due to the close proximity of the user equipment to detector 100, the received power from detector 100 in respect of cell 2 is far greater than that received at the user equipment from base station 20 in respect of macro cell 1.

In one embodiment detector 100 is operable to support two small cells. As user equipment 50 is brought into the coverage area of detector 100 the user equipment listens to the downlink channel transmitted in small cell 2 which is under the control of the detector. The detector transmits a broadcast channel read message to all user equipment which exist in small cell 2. The broadcast channel read message is implemented by sending a paging type 1 message instructing all user equipment to check the broadcast channel for changes. The user equipment within small cell 2, which will typically only be 1 user equipment, given that the coverage area supported by detector 100 is so small, reads all change system information blocks in the broadcast channel and updates its local store of parameters.

In this embodiment, the detector is operable to ensure that as part of that updated broadcast channel information, there is an update to user equipment 50's neighbour list. The detector, as it emulates the serving cell, populates the user equipment neighbour list to include small cell 3, also supported by detector 100. The cell reselection parameters may also be changed to make cell 3 a very attractive option. Those parameters to be changed may include, for example, sintra, hysteresis factor, or other analogous parameters. Detector 100 is operable to ensure that cell 3 is radiated on a higher power than small cell 2, thereby making it an attractive option for reselection. Changing the cell reselection parameters using small cell 2 triggers another cell reselection procedure. User equipment 50 is then operable to select cell 3. As a result of the different location area code allocated to small cell 3 (location area 2, as opposed to location area 1 supported by macro cell 1 and small cell 2), the user equipment attempts to perform a location area update.

Detector 100 uses the location area update mechanism and the communication establishment initiated by that mechanism to query user equipment 50 for a unique identifier, typically an IMSI or TIMSI. Although detector 100 cannot itself offer full network service to user equipment 50, it is operable to communicate with the network 10 via some form of backhaul, be it wireless or an IP network or wired, such that it can obtain further information regarding user equipment 50 from the wireless network 10 once a unique identifier has been obtained. In particular, detector 100 may use standard authentication mechanisms to verify user equipment identity. Such authentication mechanisms typically involve retrieving cryptographic key information from the core network (via, for example, an AAA server). Use of standard authentication mechanisms allows detector 100 to confirm the user equipment identity with the same level of assurance as used for cellular billing. Once user equipment identification has been performed, the detector 100 is operable to reject the location area update request from user equipment 50 with an appropriate message; for example, that the cell is too busy.

Ensuring that the location area update request is unsuccessful serves to minimise unnecessary data traffic within the network 10 and ensures that the service offered to user equipment 50 is minimally disrupted whilst user equipment 50 is interacting with detector 100.

Since no successful location area update has been performed by user equipment 50, the user equipment returns to idle mode count normally in macro cell 1. If the received power from detector cells (small cell 2 and small cell 3) is high relative to macro cell 1 received power, the user equipment 50 may only return to monitoring the macro cell carriers in idle mode camp state when it is removed from being in proximity to the sensor; that is to say, when it is removed from coverage area 110.

In some embodiments, when the location area update rejection message is sent by detector 100 the detector is also operable to switch off the detector pair of cells (small cell 2 and small cell 3) at least until the user equipment 50 is removed from the sensor. Such embodiments may allow user equipment 50 to immediately return to be camped normally upon macro cell 1.

Alternatively, in the case where no location area update has been successfully received, the user equipment may simply leave the coverage area of the detector cell and return to being camped normally on macro cell 1.

An alternative embodiment to that shown in Figure 2 is to use only one cell at the detector. According to such an embodiment, small cell 2 may be provided with a different location area code to that of macro cell 1. On issuing the broadcast channel re-read message by issuing a paging-type message, user equipment 50 may, in accordance with user equipment manufacturers' implementations, perform a location area update if it detects a change in location area code. If user equipment 50 is operable to do so, the detector again proceeds to establish the user equipment unique identifier (for example, IMSI or TIMSI) and can authenticate it using the cryptographic store of the core network as described previously. Again, detector 100 is operable to send a reject message in relation to the user equipment's request for a location area update and the user equipment returns to being camped normally on macro cell 1.

In this embodiment, identically to the previous method, the objective of the user equipment returning to being camped normally on macro cell 1 can also be achieved by switching off the detector control cells or by user equipment leaving the coverage area 110 of detector 100.

In accordance with a further embodiment, it may be that user equipment 50 is operable to automatically detect the presence of cell 2 and, more particularly, the location area code of cell 2 having changed. In such user equipment implementations user equipment automatically synchronizes to the dominant power on scrambling code 1 provided by detector 1 in respect of small cell 2. User equipment automatically then reads the broadcast channel of small cell 2 and, on discovering the local area code has changed, performs a location area update. In such implementation it is not necessary for the frame synchronization of small cell 2 to be matched to the serving cell. Furthermore, it can be seen that the detector need not be operable to issue a broadcast channel modification paging message in order to trigger a location area code update mechanism at user equipment 50.

### IMPERSONATION OF NEIGHBOUR CELLS

In alternative embodiments the detector may emulate a neighbour rather than the serving cell. As part of the procedure whereby the serving cell's scrambling code is detected, it will be appreciated that a neighbour list broadcast by the serving cell may also be read. The detector may then be operable to select a scrambling code to emulate a base station in the neighbour list.

In a further alternative embodiment it is possible to select a scrambling code not in use by either neighbouring cells or the serving cells, although this may lead to some implementation issues. In any case, according to these further embodiments the location area of the detector small cell is set to differ from that of the serving cell's location area code. In accordance with these embodiments, when user equipment comes into close proximity of the small cell supported by the detector the user equipment performs a cell reselection procedure to the cell supported by the detector and consequently requests a location area update.

An alternative technique to that of impersonation of a serving cell is to present a detector cell such that it emulates a serving cell neighbour. Figure 3 illustrates schematically the interaction between a macro cell and detector, according to a further embodiment. Identical numerals have been used throughout Figure 3 as appropriate. In the scenario illustrated by Figure 3 the macro cell 1, supported by base station 20 which acts as a serving cell, has a scrambling code of 1 and a location area code of 1. User equipment 50 in idle mode treats this cell as its serving cell.

Detector 100 supports a cell, small cell 2, in a geographical region 110 surrounding itself. In this case the detector is operable to support the small cell 2 having a scrambling code and location area code which have been selected to be different to those of the serving cell, but to match those of a neighbouring cell; that is to say, a cell in the serving cell neighbour list. As an idle user equipment 50 moves towards a detector, as shown by the arrow, within macro cell 1 and finds itself within region 110, within which sensor cell 2 is supported by the detector, the user equipment is operable to detect the stronger signal relating to cell 2 and invokes the location area update mechanism since cell 2 has a different location area code.

Having invoked a location area update procedure, the detector is able to extract a unique identifier, for example an IMSI or TIMSI, from user equipment 50. As described previously, the location area update request from user equipment 50 is rejected by detector 100 following formal identification and authentication by use of communication between detector and the network 10. Furthermore, as previously described, the location area update request may be rejected and user equipment 50 returns to being camped normally again on serving macro cell 1.

In some instances, user equipment 50 may take significant time to detect and reselect to the small cell 2 supported by detector 100. This is typically due to user equipment implementation differences and may be due to the fact that the detector scrambling code is not in serving cell 1's neighbour list or due to settings of parameters governing reselection determined by broadcast channel information messages sent by the serving cell to user equipment 50. In such cases the downlink signal is transmitted by the detector which ensures it is of a greater strength than any other nearby cell. An attempt to establish a connection, for example by making a call or sending a text message, would trigger quick reselection and overcome implementation and parameters set by the serving cell.

In some embodiments the "call" could be to a multi-digit number representing a PIN which may be sent to the detector for verification. Alternatively, the number could indicate a selection to a higher level application. That is to say, in a proximity payment application the number "called" from user equipment 50 may represent the account from which the transaction is to be deducted; for example, electronic wallet 1 or electronic wallet 2 could be represented as 0001 and 0002 respectively.

### INITIATION OF LOCATION AREA UPDATE PROCEDURES

Central to the embodiments described previously is the aim of establishing initial communication by a user equipment with the detector. In a UMTS cellular system, an initial link between user equipment and a base station is performed in a RACH/FACH exchange with a base station. Once user equipment 50 has established a communication link with a base station the following steps are performed accordingly:
1 A unique identifier, for example an IMSI or TIMSI, is retrieved from the user equipment;
2 The identity of the user equipment is authenticated using a standard cellular authentication procedure;
3 The user equipment is sent a rejection message. That rejection message may, for example, be that the cell load is too high; and
4 The user equipment returns to an idle mode and returns to being camped normally on the original serving cell.

In the above-mentioned steps the aim of the procedure is to utilise a known location update mechanism, although no location update is performed because no location update to a cell supported by detector 100 is possible.

Since no successful location area update is performed by user equipment, returning to the camped normally state on the original serving cell involves no more communications with the network and therefore minimises unnecessary network data traffic.

The return to a normal camped state is assisted by user equipment 50 being removed from the vicinity of detector 100. For a very close proximity detector, removal from the vicinity may involve movement only of the order of 10s of centimetres. For a longer range detector still operating to serve only a small cell area, the user equipment may need to move several meters or 10s of meters. The short range nature of the cell supported by detector 100 assists the return to the serving cell, since the received power at the user equipment from the sensor drops off steeply as the user equipment is moved away from the detector. As a result, the original serving cell's downlink channels will again be read and camped upon.

In order to effectively emulate a serving cell or a neighbouring cell it is desirable to minimise the time it takes user equipment to establish a connection with the detector cell and reveal its identity. In most cellular systems broadcast information is transmitted on downlink channels from base stations and, in particular, system information scheduling blocks are sent from base stations to user equipment within the cell. It is important to optimally schedule this information or similar information to be sent from a detector to user equipment placed in the coverage area of the detector so that the minimal amount of information is given as often as possible for the user equipment to successfully establish a connection with the detector cell. The system information scheduling transmitted by the detector cell downlink may be scheduled to be repeated as often as possible, such that any user equipment that commences reading the broadcast information at any point in time must listen for a minimal period of time before it has all the information it needs to commence communication with the detector.

In a UMTS cellular system, system information blocks are scheduled and transmitted by a cell. The cellular sensor in UMTS schedules those system information blocks minimally and as often as possible, thus only the system information blocks strictly required to enable the triggering of a connection establishment with a base station would be transmitted and only the information elements strictly required would be transmitted.

### EXTRACTION OF UNIQUE IDENTIFIER VIA PAGING

To page user equipment it is necessary to first get user equipment to listen to the detector cell. Such emulation has been described in relation to previous embodiments.

Use of paging messages requires user equipment to be listening to paging channels of a cell under the control of the detector. Use of paging messages enables embodiments to relinquish some reliance upon the need for a location area code to differ, or the triggering of a location area update mechanism in order to extract a unique identity. Furthermore, use of paging messages ensures that there is no need to rely on user equipment reading all of the system information blocks transmitted by a detector broadcast channel. In order to use paging messages a user equipment is required to be synchronized to a detector cell and listening and reacting when addressed to paging messages.

A paging message may avoid the need for user equipment to read system information blocks and thus the process of establishing contact, and extracting a unique identifier from user equipment can be significantly quicker if a detector is able to use a paging message.

### PAGING OPTIONS

It is possible to continuously page each and every user equipment in a network by continuously paging all user equipment unique identifiers. This is easily imagined as being like a register of user equipment unique identifiers and may, for example, be a list of user equipment IMSI and TMSI identifiers. It will be appreciated that such a "role call" may take a significant amount of time and in order to extract the unique identifier from a user equipment placed on a detector most efficiently it may be necessary to employ a more efficient paging scheme. Various schemes may be employed to reduce the number of identifiers that must be continuously paged. In one embodiment only a sub-set of TMSIs inside a particular location area of interest may be paged. The sub-set may be determined by various means; for example, the detector cell may query a regular macro cell cellular network for a list of user equipment in a particular location area code. In other embodiments the number of user equipment identifiers that must be paged may be reduced by assigning network assigned identifiers in a way that the detector could, independent of direct communication with the core network, deduce a sub-set of user equipment identifiers to page. For example, a set of all possible TMSIs in a location area may be deduced based on the particular area code in use. That is to say, location area code 10 may correspond to set number 10 of TMSI identifiers. In such an arrangement the set could contain a list of, for example, 100 user equipment unique identifiers to page.

### PAGING GROUPS OF USER EQUIPMENT

In some cellular systems it is possible to include a user equipment in a group and page by a group identifier. User equipment then listens for paging messages to a group identifier. Multiple user equipment may belong to one group identifier. Thus, a single paging message may be sent to trigger a response from many user equipment. Each user equipment within network 10 may be assigned temporarily, or at all times, a group identity. Various arrangements may be employed to determine which sub-set of paging groups a detector should continuously or non-continuously page. In some embodiments, for example, a set of group identities may be partitioned, depending on location area.

In some embodiments it is possible to determine a set of user equipment identities in an area by deploying a cell, a base station or group of base stations that discover all user equipment in a particular vicinity. That determination may be a preparation step and may be performed with less demanding time constraints than that required from the detector. For example, a cell may provide full service and thus transmit over a large area and discover all user equipment that enter that area. All those user equipment identities may then be held centrally or forwarded to detectors in the area for paging purposes. A user equipment identity can be any particular identifier and any way of initiating communication with user equipment.

An example of such a method to determine a set of user equipment identifiers would be for use in a mass transit turnstile system. In such a system it is important that the reaction time to user equipment present is as fast as possible at the turnstile. Any delay may interrupt the flow of people through the turnstile. Thus, to ensure the fastest possible detection of a handset it may be necessary to continuously page the set of handsets that are detected in the vicinity. When a user equipment reacts to a paging message, full authentication can be performed. That is to say, it is possible to provide base stations in the area of the turnstile that detect the presence of user equipment when they first enter the area, that list of user equipment in the area is held locally and then made available to detectors located on the turnstiles themselves. Furthermore, a separate "discovery" detector may be provided separately to an individual UE identifier detector. Such a discovery detector may have a larger coverage area and support a larger cell than the individual UE identifier detector. The individual UE detector may support a smaller cell at a lower power, but be operable to communicate with the discovery cell, in order to access information discovered by the discovery cell.

### UNIVERSAL NEIGHBOUR TECHNIQUES

It is possible to initiate equivalent PLMN or same PLMN or allowed peer PLMN may be used as user equipment home PLMN. User equipment may be operable to perform fast reselection to such a PLMN cell. A single change to all cells in all PLMNs to include one extra cell as a neighbour may allow a detector and network to operate and discover user equipment quickly. The same details may be used for each and every cell; for example, by use of a reserved cell configuration and, in particular, a reserved scrambling code and location area code to represent an equivalent or same PLMN for all user equipment.

In addition to introducing a universal neighbour that is on a new PLMN, a neighbour could be universal within an existing PLMN. For each PLMN in the area for which the device is to detect the UEs, the device impersonates the PLMN with downlink channels to which the user equipment will respond. If the PLMN instructs all user equipment to look for one or more frequencies (by for example populating neighbour lists accordingly), and all PLMNs select the same one or more frequencies, the detector need only radiate on this subset of all the possible frequencies. This reduces the complexity of the detector.

### INJECTION OF INTERFERENCE ON A SERVING CELL

Cell reselection may occur at a user equipment for several reasons. One reason for performing cell reselection would be that the signal strength on the serving cell becomes weak. It is thus possible in embodiments to artificially induce a serving cell signal to be determined as weak at user equipment by potentially injecting an interference signal in a region covered by the detector 100, such that any user equipment within that region performs a cell reselection.

In a UMTS cellular system, interference can be injected during the time user equipment is predicted to be performing signal strength measurements. Such an arrangement serves the purpose of being only intermittent, with the result that it minimises the interference caused for user equipment in the detector area on active calls, and for an idle user equipment the user equipment is only receiving or monitoring during the time that the interference is being injected into the area served by the detector. In a UMTS cellular system, discontinuous reception period and timing is typically determined from the broadcast channel of the serving cell so that interference can be transmitted by a detector and injected only at the time user equipment is performing measurement.

In respect of active user equipment the interference injected by a detector may reduce overall communication link quality between user equipment and the serving base station slightly, but the total interference power overtime is particularly small since it only occurs for a small fraction of the time.

Embodiments of the invention enable a large number of new mobile services based on the interaction of user equipment (mobile phones) with real world objects. One benefit to such an arrangement is that it levers existing and widely deployed cellular network systems such that services can be used by a large number of user equipment subscribers.

According to embodiments, interaction with real world objects may be forced to function with existing phones without a requirement for specialised software on the phone. Embodiments of the invention aim to establish fast connections with user equipment and thus fast detection by the sensor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method operable in an interrogation unit for identifying user equipment (50) in a wireless telecommunications network (10), said user equipment (50) being operable to communicate with network nodes (20) in said wireless telecommunications network (10), said method comprising the steps of:
receiving an indication representative of downlink radio communication characteristics of network nodes (20) recognisable by said user equipment (50);
emulating said downlink radio communication characteristics of at least one of said network nodes (20) to establish communication with said user equipment (50);
determining a sub-set of all possible user equipment unique identifiers; and
triggering release of an indication of identity by said user equipment (50), by transmitting a paging request to user equipment identifiable by said sub-set of all possible user equipment unique identifiers on said downlink signal comprising radio communication characteristics substantially identical to the radio communication characteristics of at least one of said network nodes (20) recognisable by said user equipment (50).

2. A method according to claim 1, wherein said step of emulating comprises the steps of:
transmitting a downlink signal comprising radio communication characteristics substantially identical to the radio communication characteristics of at least one of said network nodes (20) recognisable by said user equipment (50) determined to be a serving network node of said user equipment (50).

3. A method according to claim 1, wherein said step of emulating comprises the steps of:
transmitting a downlink signal comprising radio communication characteristics substantially identical to the radio communication characteristics of at least one of said network nodes (20) recognisable by said user equipment (50) determined to be in a neighbour list of network nodes (20) maintained by said user equipment (50).

4. A method according to any preceding claim, wherein transmission of said paging request comprises transmission of a series of user equipment pages, each addressed to a user equipment (50) in said wireless telecommunications network (10).

5. A method according to any preceding claim, wherein transmission of said paging request comprises transmission of a series of grouped user equipment pages, each addressed to a group of user equipment (50) in said wireless telecommunications network (10).

6. A method according to any preceding claim, wherein said step of triggering further comprises the steps of:
causing said user equipment (50) to initiate a location area update procedure.

7. A method according to any preceding claim, wherein said step of causing said user equipment (50) to initiate a location area update comprises the steps of emulating said downlink radio communication characteristics of at least one of said network nodes (20) with a signal strength sufficient to be received at said user equipment (50) greater than a corresponding signal transmitted by said network node (20) being emulated.

8. A method according to claim 7, further comprising the steps of:
transmitting an instruction to change cell reselection parameters of said user equipment.

9. A method according to claim 7, further comprising the steps of:
transmitting an instruction to said user equipment to read downlink communication channel communications.

10. A method according to claim 1, further comprising the steps of:
transmitting an interference signal on a radio channel corresponding to a communication channel from at least one of said network nodes (20) recognisable by said user equipment (50) determined to be a serving network node of said user equipment (50).

11. A method according to any preceding claim, wherein said indication of identity comprises an IMSI or TMSI.

12. A method according to any preceding claim, further comprising the steps of authenticating said released indication of identity received from said user equipment (50).

13. A computer program product, operable when executed on a computer, to perform the method steps of any one of claims 1 to 12.

14. An interrogation unit operable to identify user equipment (50) in a wireless telecommunications network (10), said user equipment (50) being operable to communicate with network nodes (20) in said wireless telecommunications network (10), said interrogation unit comprising:
reception logic operable to receive an indication representative of downlink radio communication characteristics of network nodes (20) recognisable by said user equipment (50);
transmission logic operable to emulate said downlink radio communication characteristics of at least one of said network nodes (20) to establish communication with said user equipment (50);
determination logic operable to determine a subset of all possible user equipment unique identifiers;
interrogation logic operable to trigger release of an indication of identity by said user equipment, by transmitting a paging request to user equipment identifiable by said subset of all possible user equipment unique identifiers on said downlink signal comprising radio communication characteristics substantially identical to the radio communication characteristics of at least one of said network nodes (20) recognisable by said user equipment (50).

## Patentansprüche

1. Verfahren zur Anwendung in einer Abfrageeinheit, um ein Benutzergerät (50) in einem drahtlosen Telekommunikationsnetzwerk (10) zu identifizieren, wobei das besagte Benutzerendgerät (50) betreibbar ist, um mit Netzwerkknoten (20) in dem besagten drahtlosen Telekommunikationsnetzwerk (10) zu kommunizieren, wobei das besagte Verfahren die folgenden Schritte umfasst:
Empfangen einer Angabe, welche für Downlink-Funkkommunikationseigenschaften der von dem besagten Benutzergerät (50) erkennbaren Netzwerkknoten (20) repräsentativ ist;
Emulieren der besagten Downlink-Funkkommunikationseigenschaften mindestens eines der besagten Netzwerkknoten (20), um eine Kommunikation mit dem besagten Benutzergerät (50) herzustellen;
Ermitteln eines Teilsatzes aller möglichen eindeutigen Benutzergerätkennungen; und
Triggern der Ausgabe einer Identitätsangabe, durch das besagte Benutzergerät (50), durch Übertragen einer Paging-Anforderung an durch den besagten Teilsatz aller möglichen eindeutigen Benutzergerätkennungen auf dem besagten Downlink-Signal identifizierbare Benutzergeräte, umfassend Funkkommunikationseigenschaften, die im Wesentlichen mit den Funkkommunikationseigenschaften mindestens eines der besagten durch das besagte Benutzergerät (50) erkennbaren Netzwerkknoten (20) identisch sind.

2. Verfahren nach Anspruch 1, wobei der besagte Schritt des Emulierens den folgenden Schritt umfasst:
Übertragen eines Downlink-Signals, welches Funkkommunikationseigenschaften umfasst, die im Wesentlichen mit den Funkkommunikationseigenschaften mindestens eines der besagten durch das besagte Benutzergerät (50) erkennbaren Netzwerkknoten (20), welcher als ein das besagte Benutzergerät (50) bedienender Netzwerkknoten ermittelt wurde, identisch sind.

3. Verfahren nach Anspruch 1, wobei der besagte Schritt des Emulierens den folgenden Schritt umfasst:
Übertragen eines Downlink-Signals mit Funkkommunikationseigenschaften, welche im Wesentlichen mit den Funkkommunikationseigenschaften mindestens eines der besagten durch das besagte Benutzergerät (50) erkennbaren Netzwerkknoten (20), welcher als sich in einer von dem besagten Benutzergerät (50) gepflegten Nachbarliste von Netzwerkknoten (20) befindlich ermittelt wurde, identisch sind.

4. Verfahren nach einem beliebigen der vorstehenden Ansprüche, wobei das Übertragen der besagten Paging-Anforderung das Übertragen einer Reihe von Benutzergerät-Funknachrichten umfasst, welche jeweils an ein Benutzergerät (50) in dem besagten drahtlosen Telekommunikationsnetzwerk (10) adressiert sind.

5. Verfahren nach einem beliebigen der vorstehenden Ansprüche, wobei das Übertragen der besagten Paging-Anforderung das Übertragen einer Reihe von gruppierten Benutzergerät-Funknachrichten umfasst, welche jeweils an eine Gruppe von Benutzergeräten (50) in dem besagten drahtlosen Telekommunikationsnetzwerk (10) adressiert sind.

6. Verfahren nach einem beliebigen der vorstehenden Ansprüche, wobei der besagte Schritt des Triggerns weiterhin den folgenden Schritt umfasst:
Veranlassen, dass das besagte Benutzergerät (50) eine Ortsbereichsaktualisierungsprozedur initiiert.

7. Verfahren nach einem beliebigen der vorstehenden Ansprüche, wobei der besagte Schritt des Veranlassens, dass das besagte Benutzergerät (50) eine Ortsbereichsaktualisierungsprozedur initiiert, den Schritt des Emulierens der besagten Downlink-Funkkommunikationseigenschaften mindestens eines der besagten Netzwerkknoten (20) mit einer Signalstärke, welche ausreichend ist, um an dem besagten Benutzergerät (50) empfangen zu werden, und größer ist als ein entsprechendes von dem besagten Netzwerkknoten (20) übertragenes Signal, welches emuliert wird.

8. Verfahren nach Anspruch 7, weiterhin umfassend den folgenden Schritt:
Übertragen eines Befehls zum Ändern der Zellenneuauswahl-Parameter des besagten Benutzergeräts.

9. Verfahren nach Anspruch 7, weiterhin umfassend den folgenden Schritt:
Übertragen eines Befehls zum Lesen von Downlink-Kommunikationskanal-Kommunikationen an das besagte Benutzergerät.

10. Verfahren nach Anspruch 1, weiterhin umfassend den folgenden Schritt:
Übertragen eines Störsignals auf einem Funkkanal, welcher einem Kommunikationskanal von mindestens einem der besagten durch das besagte Benutzergerät (50) erkennbaren Netzwerkknoten (20) entspricht und als das besagte Benutzergerät (50) bedienender Netzwerkknoten ermittelt wurde.

11. Verfahren nach einem beliebigen der vorstehenden Ansprüche, wobei die besagte Identitätsangabe eine IMSI oder TMSI umfasst.

12. Verfahren nach einem beliebigen der vorstehenden Ansprüche, weiterhin umfassend den Schritt des Authentifizierens der besagten ausgegebenen Identitätsangabe von dem besagten Benutzergerät (50).

13. Computerprogramm-Produkt, welches bei der Ausführung auf einem Computer betreibbar ist, um die Verfahrensschritte eines beliebigen der Ansprüche 1 bis 12 durchzuführen.

14. Abfrageeinheit, betreibbar, um ein Benutzergerät (50) in einem drahtlosen Telekommunikationsnetzwerk (10) zu identifizieren, wobei das besagte Benutzerendgerät (50) betreibbar ist, um mit Netzwerkknoten (20) in dem besagten drahtlosen Telekommunikationsnetzwerk (10) zu kommunizieren, wobei die besagte Abfrageeinheit umfasst:
Empfangslogik, betreibbar für den Empfang einer Angabe, welche für Downlink-Funkkommunikationseigenschaften der von dem besagten Benutzergerät (50) erkennbaren Netzwerkknoten (20) repräsentativ ist;
Übertragungslogik, betreibbar für die Emulierung der besagten Downlink-Funkkommunikationseigenschaften mindestens eines der besagten Netzwerkknoten (20), um eine Kommunikation mit dem besagten Benutzergerät (50) herzustellen;
Ermittlungslogik, betreibbar für die Ermittlung eines Teilsatzes aller möglichen eindeutigen Benutzergerätkennungen; und
Abfragelogik, betreibbar für das Triggern der Ausgabe einer Identitätsangabe durch das besagte Benutzergerät durch Übertragen einer Paging-Anforderung an durch den besagten Teilsatz aller möglichen eindeutigen Benutzergerätkennungen auf dem besagten Downlink-Signal identifizierbare Benutzergeräte, umfassend Funkkommunikationseigenschaften, die im Wesentlichen mit den Funkkommunikationseigenschaften mindestens eines der besagten durch das besagte Benutzergerät (50) erkennbaren Netzwerkknoten (20) identisch sind.

## Revendications

1. Procédé permettant, dans une unité d'interrogation, d'identifier un équipement utilisateur (50) dans un réseau de télécommunication sans fil (10), ledit équipement utilisateur (50) permettant de communiquer avec des noeuds de réseau (20) dans ledit réseau de télécommunication sans fil (10), ledit procédé comprenant les étapes suivantes :
recevoir une indication représentative de caractéristiques de radiocommunication de liaison descendante de noeuds de réseau (20) reconnaissables par ledit équipement utilisateur (50) ;
émuler lesdites caractéristiques de radiocommunication de liaison descendante d'au moins un desdits noeuds de réseau (20) dans le but d'établir une communication avec ledit équipement utilisateur (50) ;
déterminer un sous-ensemble de tous les identifiants uniques d'équipements utilisateur possibles ; et
déclencher la libération d'une indication d'identité par ledit équipement utilisateur (50), en transmettant une demande de radiomessagerie à un équipement utilisateur identifiable par ledit sous-ensemble de tous les identifiants uniques d'équipements utilisateur possibles sur ledit signal de liaison descendante comprenant des caractéristiques de radiocommunication sensiblement identiques aux caractéristiques de radiocommunication d'au moins un desdits noeuds de réseau (20) reconnaissables par ledit équipement utilisateur (50).

2. Procédé selon la revendication 1, dans lequel ladite étape d'émulation comprend l'étape suivante :
transmettre un signal de liaison descendante comprenant des caractéristiques de radiocommunication sensiblement identiques aux caractéristiques de radiocommunication d'au moins un desdits noeuds de réseau (20) reconnaissables par ledit équipement utilisateur (50) déterminé comme étant un noeud de réseau de desserte dudit équipement utilisateur (50).

3. Procédé selon la revendication 1, dans lequel ladite étape d'émulation comprend l'étape suivante :
transmettre un signal de liaison descendante comprenant des caractéristiques de radiocommunication sensiblement identiques aux caractéristiques de radiocommunication d'au moins un desdits noeuds de réseau (20) reconnaissables par ledit équipement utilisateur (50) déterminé comme étant dans une liste de voisins de noeuds de réseau (20) gérée par ledit équipement utilisateur (50).

4. Procédé selon l'une quelconque des revendications précédentes, dans lequel la transmission de ladite demande de radiomessagerie comprend la transmission d'une série de radiomessages d'équipement utilisateur, chacun étant adressé à un équipement utilisateur (50) dans ledit réseau de télécommunication sans fil (10).

5. Procédé selon l'une quelconque des revendications précédentes, dans lequel la transmission de ladite demande de radiomessagerie comprend la transmission d'une série de radiomessages d'équipements utilisateur groupés, chacun étant adressé à un groupe d'équipements utilisateur (50) dans ledit réseau de télécommunication sans fil (10).

6. Procédé selon l'une quelconque des revendications précédentes, dans lequel ladite étape de déclenchement comprend en outre l'étape suivante :
entraîner ledit équipement utilisateur (50) à lancer une procédure de mise à jour de zone de localisation.

7. Procédé selon l'une quelconque des revendications précédentes, dans lequel ladite étape consistant à entraîner ledit équipement utilisateur (50) à lancer une mise à jour de zone de localisation comprend les étapes d'émulation desdites caractéristiques de radiocommunication de liaison descendante d'au moins un desdits noeuds de réseau (20) avec une intensité de signal, suffisante pour être reçue au niveau dudit équipement utilisateur (50), supérieure à un signal correspondant transmis par ledit noeud de réseau (20) émulé.

8. Procédé selon la revendication 7, comprenant en outre l'étape suivante:
transmettre une instruction pour changer des paramètres de resélection de cellule dudit équipement utilisateur.

9. Procédé selon la revendication 7, comprenant en outre l'étape suivante :
transmettre une instruction audit équipement utilisateur pour lire des communications de canal de communication de liaison descendante.

10. Procédé selon la revendication 1, comprenant en outre l'étape suivante :
transmettre un signal d'interférence sur un canal radio correspondant à un canal de communication à partir d'au moins un desdits noeuds de réseau (20) reconnaissables par ledit équipement utilisateur (50) déterminé comme étant un noeud de réseau de desserte dudit équipement utilisateur (50).

11. Procédé selon l'une quelconque des revendications précédentes, dans lequel ladite indication d'identité comprend une IMSI ou une TMSI.

12. Procédé selon l'une quelconque des revendications précédentes, comprenant en outre les étapes d'authentification de ladite indication d'identité libérée provenant dudit équipement utilisateur (50).

13. Produit de programme informatique permettant, lorsqu'il est exécuté sur un ordinateur, d'exécuter les étapes du procédé selon l'une quelconque des revendications 1 à 12.

14. Unité d'interrogation permettant d'identifier un équipement utilisateur (50) dans un réseau de télécommunication sans fil (10), ledit équipement utilisateur (50) permettant de communiquer avec des noeuds de réseau (20) dans ledit réseau de télécommunication sans fil (10), ladite unité d'interrogation comprenant :
une logique de réception permettant de recevoir une indication représentative de caractéristiques de radiocommunication de liaison descendante de noeuds de réseau (20) reconnaissables par ledit équipement utilisateur (50) ;
une logique de transmission permettant d'émuler lesdites caractéristiques de radiocommunication de liaison descendante d'au moins un desdits noeuds de réseau (20) dans le but d'établir une communication avec ledit équipement utilisateur (50) ;
une logique de détermination permettant de déterminer un sous-ensemble de tous les identifiants uniques d'équipements utilisateur possibles ;
une logique d'interrogation permettant de déclencher la libération d'une indication d'identité par ledit équipement utilisateur, en transmettant une demande de radiomessagerie à un équipement utilisateur identifiable par ledit sous-ensemble de tous les identifiants uniques d'équipements utilisateur possibles sur ledit signal de liaison descendante comprenant des caractéristiques de radiocommunication sensiblement identiques aux caractéristiques de radiocommunication d'au moins un desdits noeuds de réseau (20) reconnaissables par ledit équipement utilisateur (50).
